# EUROPEAN PATENT SPECIFICATION

(11) **EP 0 364 243 B1**
(45) Date of publication and mention of the grant of the patent: **10.04.1996**
(21) Application number: 89310401.8
(22) Date of filing: 11.10.1989
(51) Int. Cl.: G06T 15/10, G06F 17/10

(54) **Three-dimensional geometry processing method and apparatus therefor**
Verfahren zur Verarbeitung einer dreidimensionalen Geometrie und Gerät dafür
Méthode de traitement de géométrie à trois dimensions et dispositif à cet effet

(30) Priority: 12.10.1988 JP 256352/88
(43) Date of publication of application: 18.04.1990
(73) Proprietor: MATSUSHITA ELECTRIC INDUSTRIAL CO., LTD., Kadoma-shi, Osaka-fu, 571 (JP)
(72) Inventor: Arakawa, Yoshiki, Yawata-shi Koyoto-fu, 614 (JP)
(74) Representative: Crawford, Andrew Birkby

(56) References cited:
- US-A- 4 766 556
- COMPUTER GRAPHICS, PROC. of SIGGRAPH '85, vol. 19, no. 3, San Francisco, 22nd- 26th July 1985, pages 141-149; F. YAMAGUCHI: "A unified approach to interference problems using a triangle processor"
- PATENT ABSTRACTS OF JAPAN, vol. 10 no. 135 (P-457)(2192), 20th May 1986; & JP- A-60 256 874 (HITACHI SEISAKUSHO K.K.) 18-12-1985
- ADV. COMPUTER GRAPHICS, PROC. OF COMPUTER GRAPHICS TOKYO '86 1986, TOKYO. JP pages 335 - 347; F. YAMAGUCHI ET AL.: 'Applications of the 4x4 determinant method and the triangle processor to various interference problems'

## Description

The present invention relates to a method and apparatus for three-dimensional geometry processing wherein three-dimensional objects with stuffed contents, that is to say, solid geometry is formed, operated, and displayed.

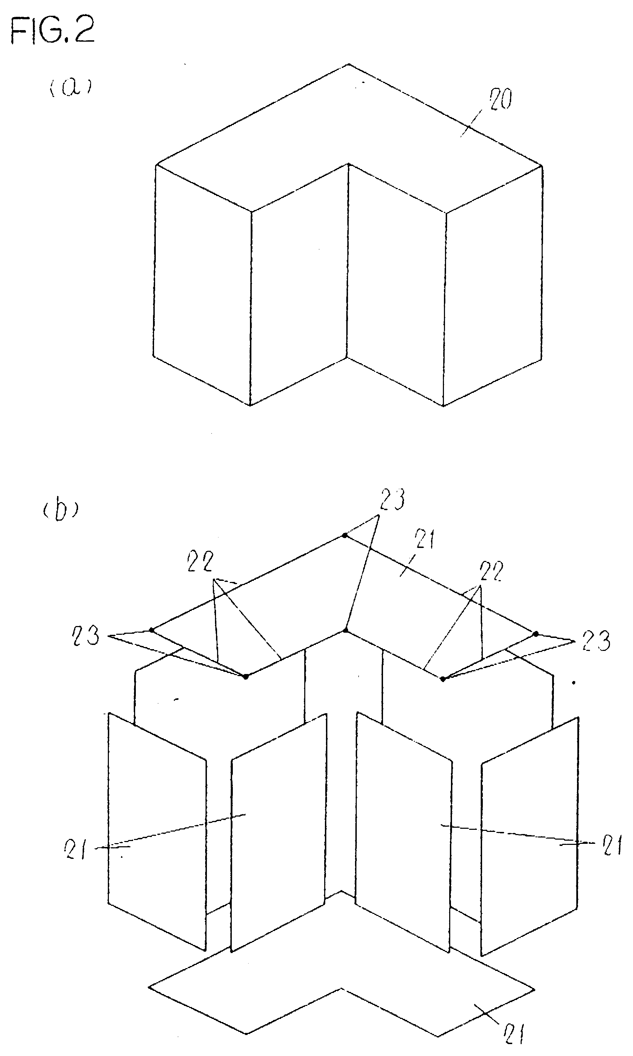

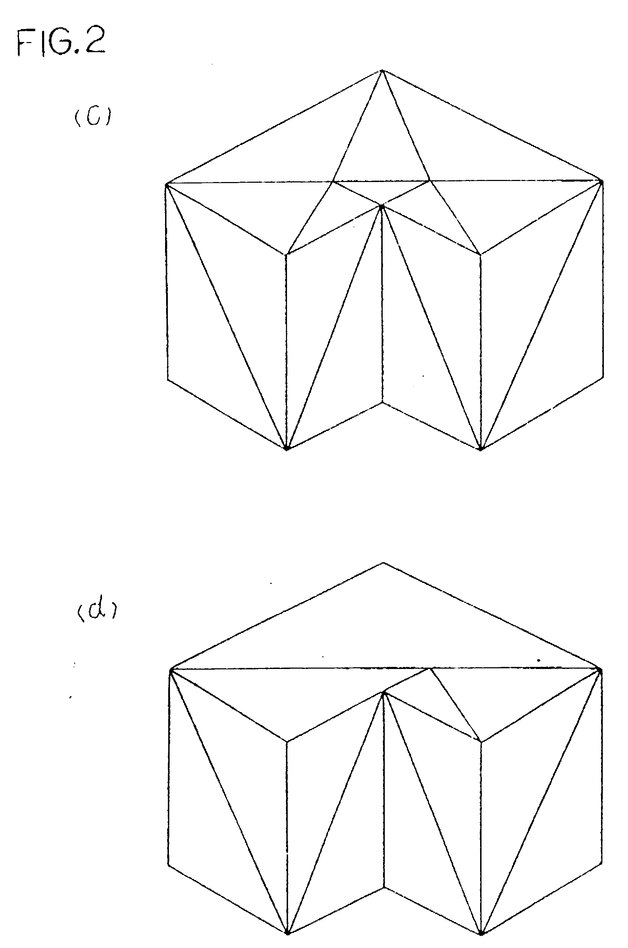

In the conventional solid modelling technic, various methods for expressing shapes are suggested for example, such as a solid shape 20 shown in Fig. 2 (a). Among those methods, B-Rep (Boundary Representation) method is a main and major one at present.

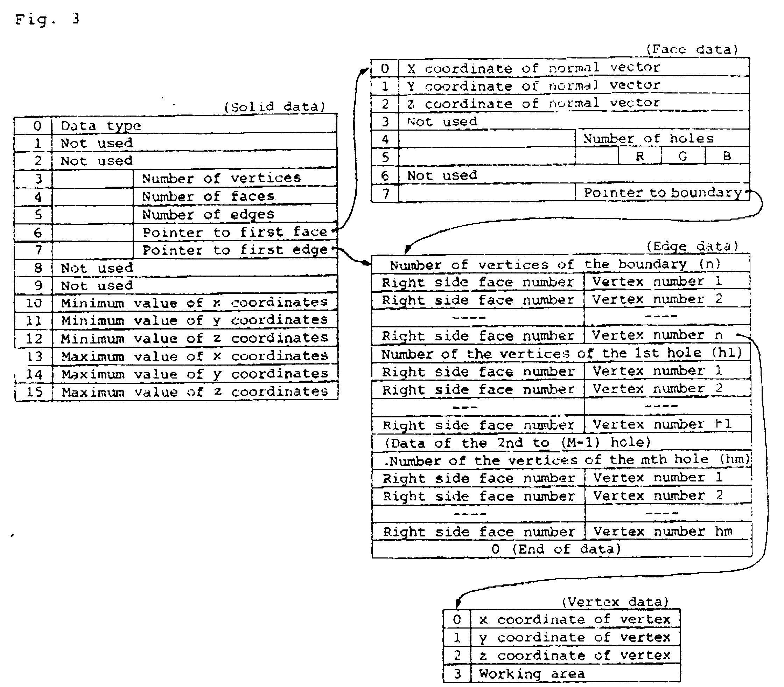

As is shown in Fig. 2 (b), in B-Rep method, the geometry 20 is expressed by defining all the faces 21 enclosing the geometry, all the edges 22 enclosing said faces 21 and the vertices 23 of both sides (tops) of said edges. More specifically, in the conventional B-Rep method, faces showing the surface of the geometry are consisted of polygons 21 is sharing their edges with adjacent ones. Moreover, their data structure consists of those faces, edges and vertices as shown in Fig. 3.

However, B-Rep method based on said polygons 21 has a complicated data structure with variable length of data as shown in Fig. 3. Furthermore, as to original functions of the solid modelling technique such as geometrical set operation, mass property calculation, hidden line/hidden surface removal, etc. B-Rep method has some problems in that the processing is very complicated, it is difficult to obtain reliability in practical use, or processing speeds re slow since the operations using various polygons are taken as a basic method.

The following prior art reference have been noted as potentially relevant to the invention.

Computer Graphics, Proc. of Siggraph '85 vol. 19, no. 322 July 1985 San Francisco, U.S. pages 141-149. "A unified approach to interference problems using a triangle processor" discloses that it is very effective in solid modelling to triangulate the faces or volumes prior to processing, in particular when mass property processing, hidden line elimation and boolean shape operations are performed. A hardware processor is proposed, which enables in particular to intersect a triangle with a point, line or another triangle. Points, lines and triangles are recorded. A disadvantage of this technique is that redundant edge data is stored and that triangles have to share edges; a triangle cannot have an edge which is the sum of the edge of other triangles.

JP-A-60256874 deals with a technique for decreasing the amount of data stored for many triangles with common edges.

Adv. Computer Graphics. Proc. of Computer Graphics Tokyo '86 pages 335-347, F. Yamaguchi et al: concerns the use of 4 x 4 determinant method and the triangle processor to various interference problems.

US-A-4766556 relates to a process for storing manipulating and displaying 3 dimensional solid objects in memory.

It is the object of the present invention as claimed to solve the above-mentioned problems and to provide an efficient method and apparatus for the purpose of processing solid geometry with high reliability as well as utility.

In order to solve the above-mentioned problems, the present invention as claimed provides a "B-Rep" expression method using triangular faces which "do not necessarily share their edges" (see Fig. 2 (d)) when solid geometry are expressed.

A further object of the invention is the realisation of an apparatus for combining a geometric modeler and a 3-d graphic display system.

More specifically, "do not necessarily share their edges" is used to mean "it doesn't matter whether the triangular faces share their edges or not", and this method is to express solid geometry by sets of "triangular faces sharing their edge(s)" and "triangular faces sharing no edges". In this connection, the conventional method has to always share their edges (see Fig. 2 (c)).

By using the above-mentioned "B-Rep method by the use of triangular faces which do not necessarily share their edges(s)", a simple data structure with fixed data length can be adapted and only face data and vertex data are necessary with no edge data. With these advantages, a simple and reliable processing is available and high processing speeds are obtained.

As is shown in Fig. 2 (c), another method only to change the conventional B-Rep method into a simple Triangle B-Rep method (B-Rep method by the use of triangular faces sharing their edge(s)) is suggested but in this method, though its data structure as well as geometry processing operation becomes simple, the data amount (the number of triangular faces) increases in a large scale, resulting in slow speeds in processing.

Accordingly, "Be-Rep method using triangular faces which do not necessarily share their edge(s)" is a geometry expression method which has advantages in both simplicity due to the processing based on "triangles" and in reduction of the data amount.
Fig. 1 is the simplified overall block diagram of the first embodiment of the three-dimensional geometry data processing system related to the invention;
Fig. 2 (a) through (d) are respectively the charts comparatively explaining the conventional method and the invented method of expressing three-dimensional solid geometry data;
Fig. 3 is the chart designating the composition of conventional solid geometry data;
Fig. 4 designates the division of triangular face of the three-dimensional solid geometry pattern;
Fig. 5 is the chart designating the composition of solid geometry data embodied by the invention;
Fig. 6 is the explanatory chart of triangular face without sharing edges;
Fig. 7 is the explanatory chart designating the case in which triangular faces adjoin each other at vertices and the case in which triangular faces do not adjoin themselves at vertices;
Fig. 8 is a flowchart designating the set operation of triangular face data;
Fig. 9 (a) to (b) are respectively the charts designating finely divided triangular faces;
Fig. 10 (a) and (b) are respectively the charts designating the recomposition of triangular face data;
Fig. 11 (a) and (b) are respectively the flowcharts designating processes for converting the triangular face B-Rep data into three-dimensional run-length data;
Fig. 12 is the flowchart of the process for computing the edge data from the triangular-face data;
Fig. 13 (a) through (d) are respectively the charts for explaining the adjoining triangular face data;
Fig. 14 (a) and (b) are respectively the flowcharts designating the sequence for processing hidden line removal;
Figs. 15, 16 and 17 (a) through (d) respectively designate the position relationship between the edge data and the triangular face data; and
Fig. 18 is the simplified overall block diagram of the second embodiment of the three-dimentional solid geometry data processing system related to the invention.

### (5) Description of the Preferred Embodiments

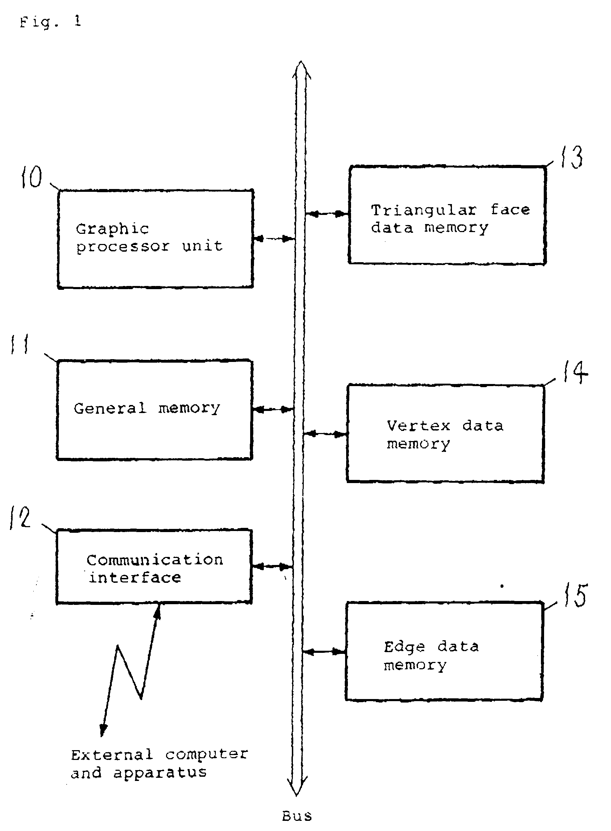

The system of the present invention is described in detail. One way of carrying out the invention is described below with reference to Fig. 1.

General three-dimensional objects can be expressed by geometrical set operations on three-dimensional primitive shapes such as cubes, rectangular solids, cylinders, cones, spheres, etc. Accordingly, a three-dimensional geometry is defined by the use of the primitive shapes and those data are stored in a storage unit 11. Then solid geometry data are produced from those primitive data by a graphic processing operation unit 10.

In the present invention, a new geometry expressing method named "B-Rep method using triangular faces which do not necessarily share their edges" is applied to the data structure for solid geometry as is above-mentioned.

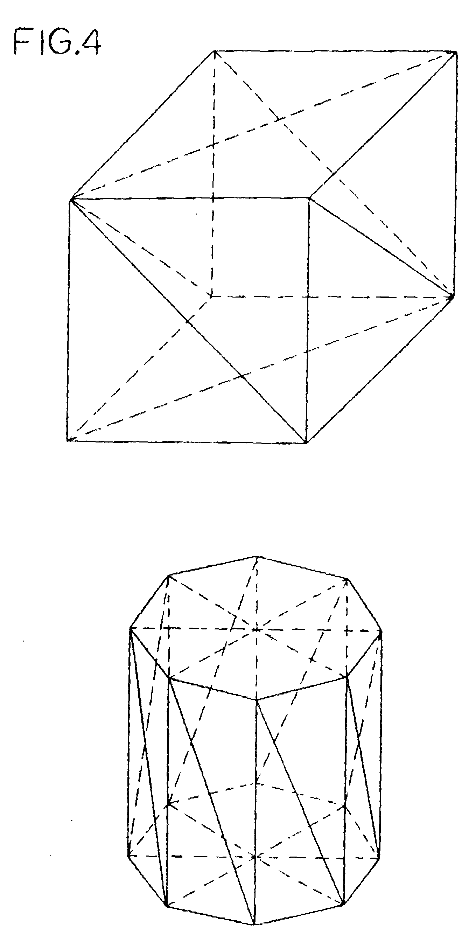

When solid geometry data are produced from the primitive data, the surface of the primitive shape is divided using triangular faces with a proper method, as is illustrated in Fig. 4.

Fig. 4 shows examples of the triangle division for a cube and a cylinder. Then, triangular face data produced by the triangle division and their vertex data showing their coordinates are stored in a triangular face data storage unit 13 and a vertex data storage unit 14 respectively.

Based on these triangular face data and vertex data, solid operation functions such as geometrical set operation, mass property calculation, hidden surface/hidden line removal, etc. are performed by a graphic processing operation unit 10.

Edge data obtained from the result of the hidden surface/line removal are stored in an edge data storage unit 15.

Moreover, in this preferred embodiment, all the above-mentioned data can be transmitted or received to/from external computers or external units by the use of a communication interface 12.

In this case, the definition of shapes is given by using the primitive shapes, but other methods are of course usable. For example, based on two-dimensional cross-sectional geometry, by sweeping or revolving the geometry, solid geometry data, namely, the triangle B-Rep data can be produced.

Next, the main disclosure of the present invention namely, "B-Rep method using triangles which do not necessarily share their edges" is described in detail with reference to the drawings.

In this expression method, the surface of a shape is shown by the sets of "triangular faces sharing no edges" and "triangular faces sharing their edge(s)." Accordingly, this method makes them capable of coexistance to get advantages of simplicity and high speeds by the process based on using "triangles" and to achieve the avoidance of a large amount of data. (Comparative references to Fig. 2 (c) as well as (d)).

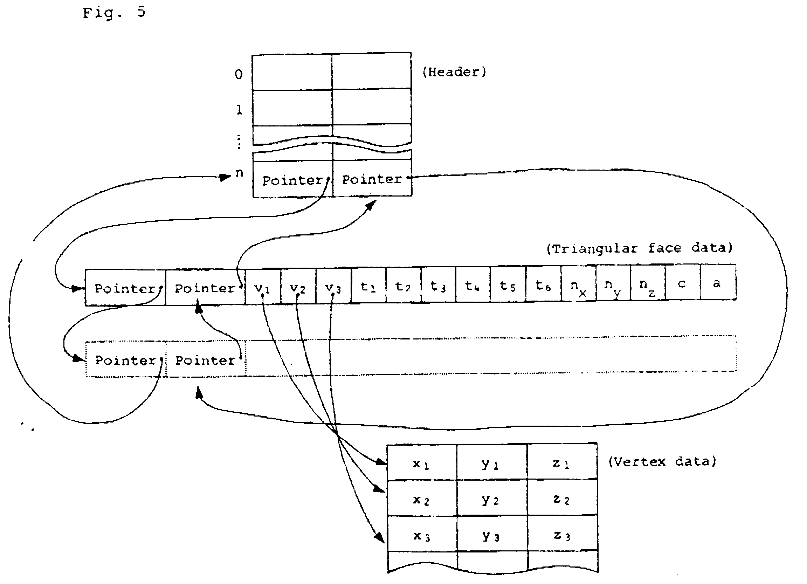

The data structure shown in Fig. 5, consists of headers, triangular face data and vertex data. Compared with the conventional B-Rep method, the structure is very simple. Namely, it has a one-dimensional list structure with fixed length and doesn't need edge data.

In the header part, there are pointers showing the first and the last of the triangular face data. The part controls the triangular face data.

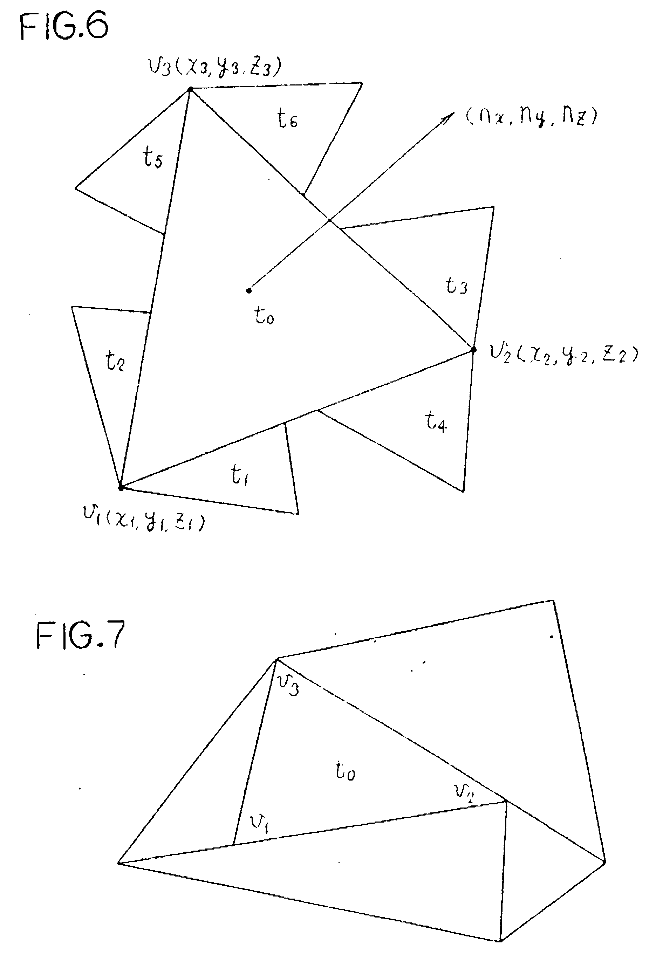

The triangular face data part has the one-dimensional list structure with fixed length comprising bi-directional pointers. The composition consists of bi-directional pointers, pointers for the vertex data, (v₁, v₂, v₃), pointers for triangular faces adjacent one another at their vertices (t₁, t₂, t₃, t₄, t₅, t₆), normal vectors, (nx, ny, nz), color data c and attribute data a. (References to Fig. 6). The direction of normal vectors is positive outside of the shape.

In case there are no adjacent triangles, tᵢ (i = 1, ..., 6) is given "null". For instance, "null" is given to t₁ and t₃ in the example shown in Fig. 7.

The vertex data is composed of X, Y and Z coordinate axes indicating the vertices.

Next, explanations are given on the geometrical set operation. First, the union operation is described in detail. The union operation can be found by defining positional relations among the triangles composing the surfaces of the two shapes on which the operation will be carried out and by dividing the triangle into smaller ones if it intersects with other triangle(s).

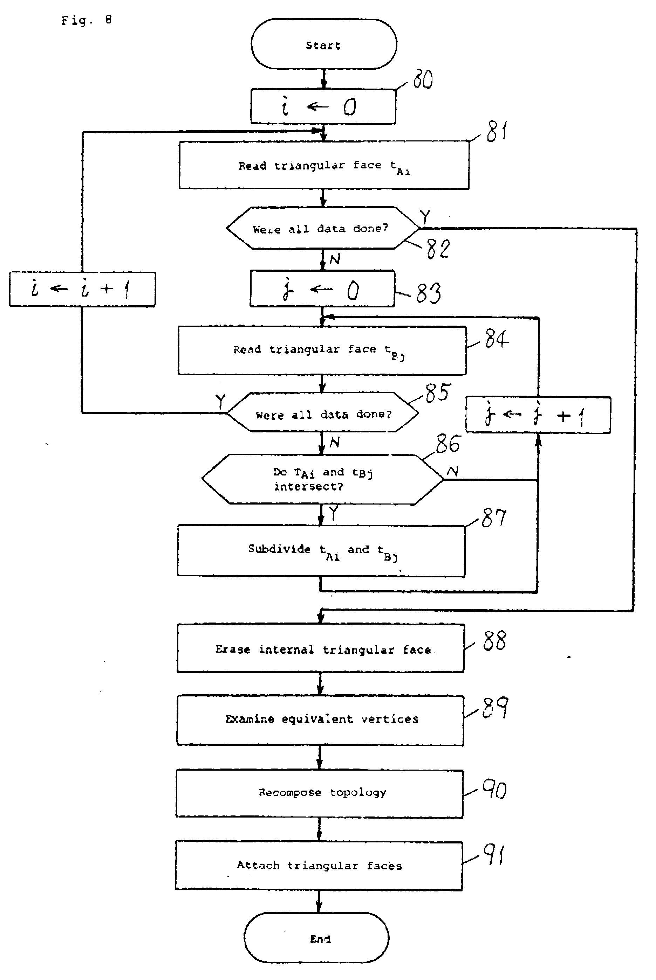

The processing for the union operation is described in detail with reference to the flowchart in Fig. 8. In this case, the union operation between geometry A and geometry B will be found. The triangular face data composing the geometry A is expressed t_{Ai} (i = 0, 1, ...) and those composing the geometry B t_{Bj} (j = 0, 1, ...) respectively.

First, i = 0 is given as an initial setting (Step 80). Next, the triangular face data, t_{Ai} are successively read from the triangular face data storage unit 13 (Step 81).

Then, j = 0 is given to each t_{Ai} as an initial setting (Step 83) and the triangular face data t_{Bj} are successively read from the said unit 13 (Step 84).

Next, the positional relations between t_{Ai} and t_{Bj} are checked and it is judged whether triangles intersect one another or not (Step 86). When they intersect one another, their t_{Ai} and t_{Bj} are divided into smaller ones (Step 87).

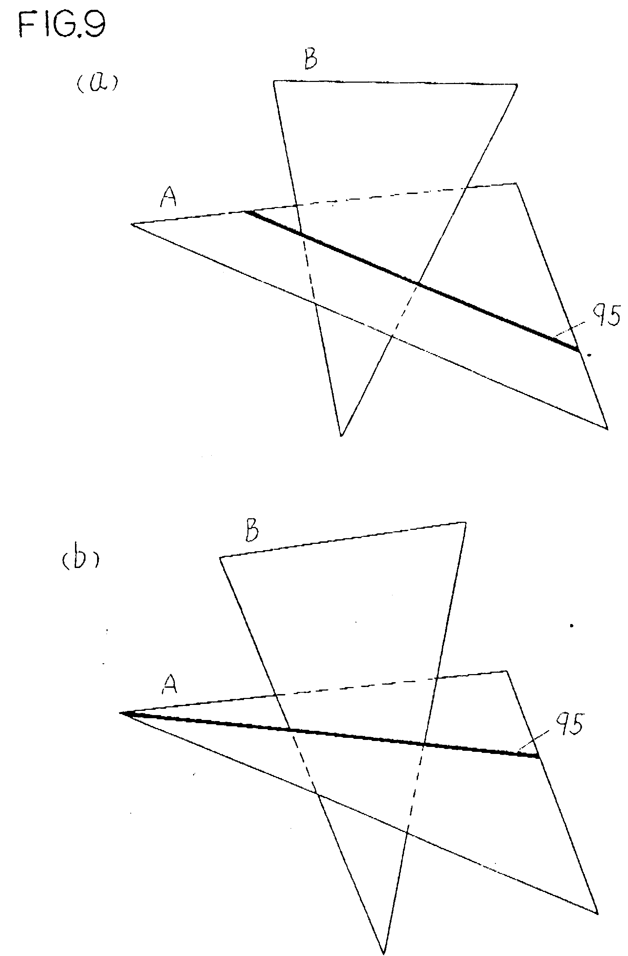

As is shown in Fig. 9, there are two cases in these dividing patterns. In one case, the intersected line from both of the geometry intersects the triangle at two sides (Fig. 9 (a)) and in the other case it intersects at one side and one vertex (Fig. 9 (b)). In this way, the method of the present invention gives a simple processing having only two cases to select.

The above-mentioned processing from 80 to 87 is performed on all the combinations of the triangles.

Next, the triangles inside each geometry are erased (Step 88). Then, on the intersected lines between the two geometry A and B, the vertices, namely, the common vertices are found (Step 89). Next, on these common vertices, the topology of adjacent triangles (the adjoining relations of the triangles) is reproduced (Step 90).

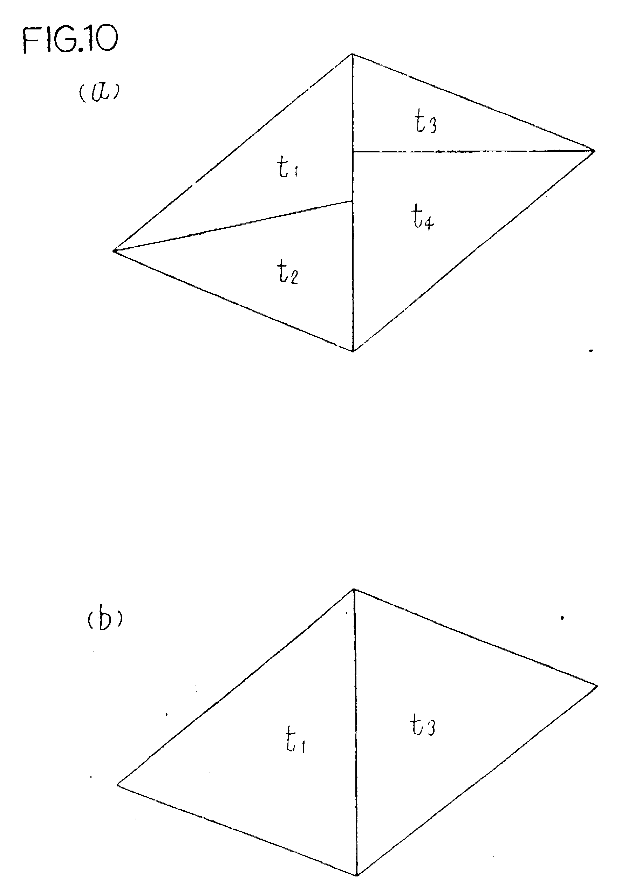

When the above-mentioned minute divisions of the triangles are repeated, the divisions become unnecessarily too minute, as shown in Fig. 10 (a). So, if there are some triangles which can be reproducible, that is to say, if at least one side of them makes a straight line with that of adjacent one, the reproducing process can be carried out as is shown in Fig. 10 (b) (Step 91).

In this reproducing process, the process using the definition of "sharing no edges" is simpler and has higher speeds than that using the "sharing edges" definition, because the former process has less triangles to be processed. By this process, the reduction of triangular face data amount can be achieved. The above is the processing flow on the union operation.

Next, explanations are also given on the intersection operation of the solid geometry. The process for the intersection operation is almost the same as the union operation. The only different process is that of Step 88, in which the triangles outside of each geometry are erased.

Further explanations are given on the subtraction operation. In this case, the geometry A is subtracted by the geometry B. As a pre-processing, the triangular face data of the geometry B are rearranged so that each surface of the triangles is disposed inside out. Then, the process of the intersection operation is performed.

As to the mass properties calculation (volume, center of gravity, moment of inertia, etc.), the three-dimensional run length data are transduced from the triangle data expressing the geometry and then by the use of the data, the mass properties calculation is performed.

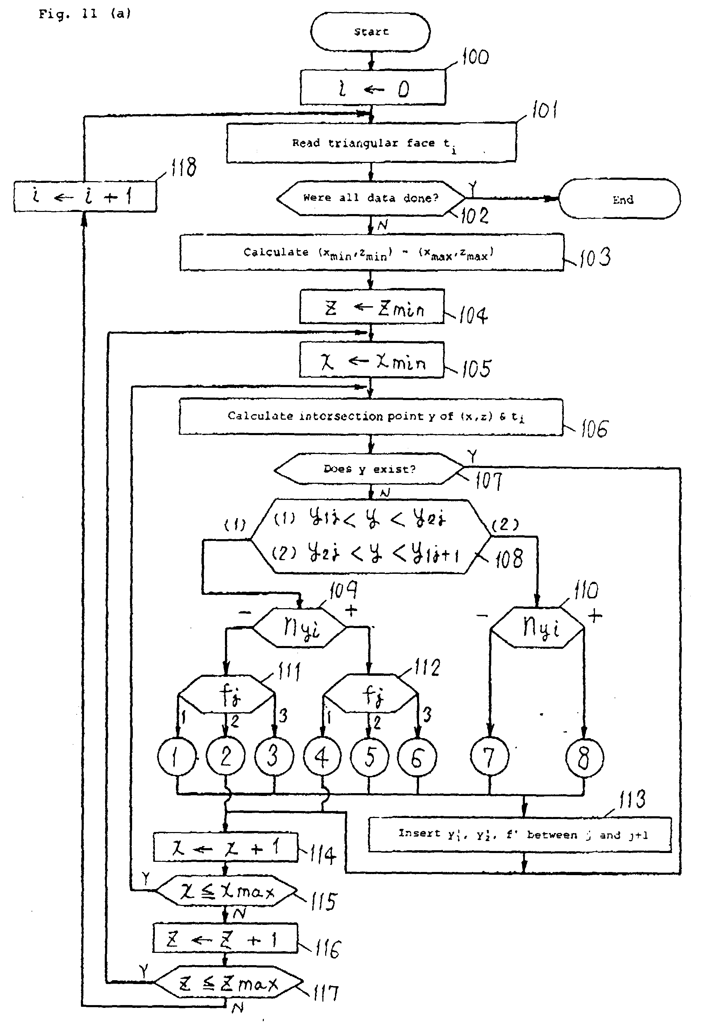

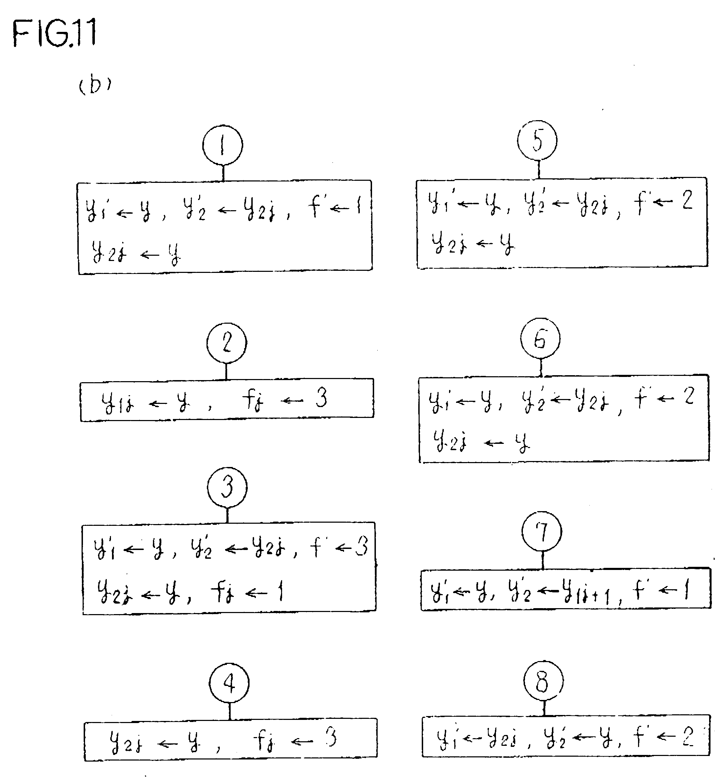

It is assumed in this embodiment that the run-length data is in the direction of the axis Y. Referring now to the flowcharts shown in Fig. 11 (a) and (b), the triangular face data processing operation is described below.

First, step 100 is entered, in which the initial condition i = 0 is set. Next, when step 101 is entered, the triangular face data ti is sequentially read from the triangular face data memory 13. Next, step 103 is entered, in which the range (xmin., zmin.) - (xmax., zmax.) of the coordinate X and the coordinate Z present in the triangular face data is computed. Next, when steps 104 and 105 are respectively entered, the initial condition z = zmin., xmin. is set. Next, when step 106 is entered, Y-coordinate y at the intersecting point between the straight line (x, z) in parallel with the axis Y and the triangular face data ti is computed. If there were no intersecting point, then the operation mode jumps from step 107 to step 114. Next, comparison is executed between the Y-coordinate y and the starting point y1j/terminal point y2j of the run length data stored in memory while step 108 is underway. If the condition y1j < y < y2j (on the run-length data j) were established, then step 109 is entered. If the condition y2j < y < y1(j+1) (between the run-length data j and the run-length data (j+1)) were established, then step 110 is entered.

When step 109 is entered, the code of the Y-coordinate nyi of the normal vector of the triangular face data ti is checked. If the checked result were minus, then, step 112 is entered.

When step 111 is underway, the value of flag fj of the run-length data is checked. If the value were "1", case 1 is activated. If the value were "2", then, case 2 is activated. If the value were "3", then, case 3 is activated. Now, if the value of flag fj were "1", it indicates that only the starting point of the run-length data j is firmly determined. If the value of flag fj were "2", only the terminating point of the run-length data j is firmly determined. If the value were "3", the starting point and the terminating point of the run-length data j are respectively determined. If the starting and terminating points were not yet determined, the value of the adjoining run-length data is stored in memory in the transitory-value condition.

As was done while step 111 was underway, when step 112 is entered, the value of flag fj of the run-length data is checked. If the value were "1", then, case 4 is activated. If the value were "2", case 5 is activated. If the value were 3, case 6 is activated.

As was done while step 109 was underway, when step 110 is entered, the code of the Y-coordinate nyi is checked. If the checked result were minus, then, case 7 is activated. If the result were plus, then, case 8 is activated.

When cases 1 through 8 and step 113 are respectively entered, the run-length data is modified and added up according to the status of the cases 1 through 8. The added and modified data is then stored in memory 11.

Those processes including steps 106 through 113 are executed in connection with all the scanning lines (x, z) satisfying the condition xmin. ≦ x ≦ xmax., zmin. ≦ z ≦ zmax.

Those processes related to steps 101 through 108 are executed in connection with all the triangular face data ti. As a result, three-dimensional run-length data are generated from the triangular face data.

The method of computing the mass property from the three-dimensional run-length data is fully described in US-A-4 766 556 and thus, description of this method is deleted.

Next, the method of executing the hidden-line removal process is described below. This process is sequentially executed by initially determining the edge data based on the triangular face data designating the three-dimensional configuration before the system can eventually compare the depth between the edge data and the triangular face data.

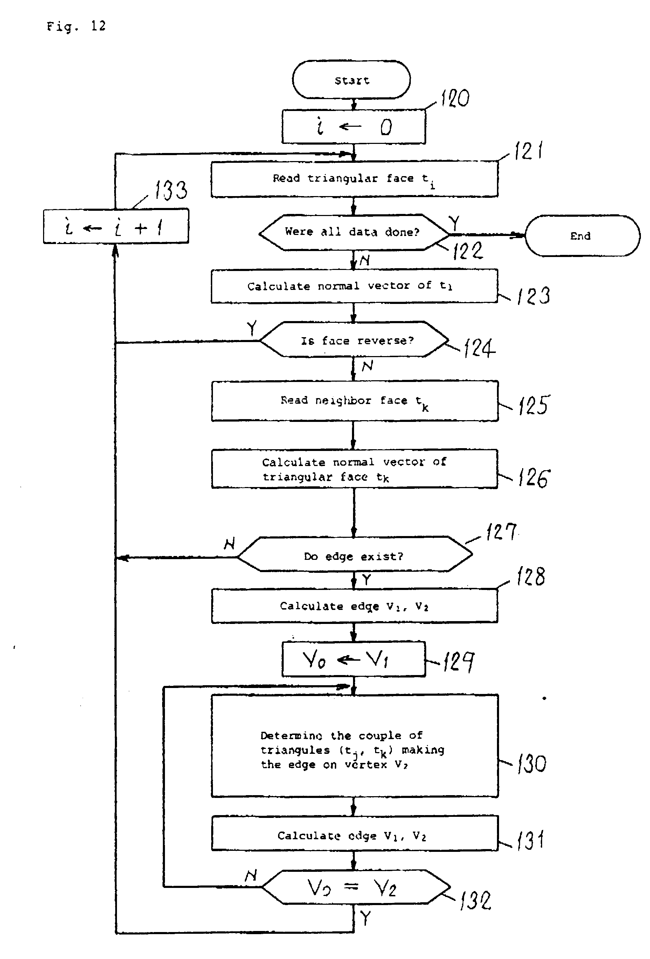

Referring now to the flowchart shown in Fig. 12, the method of determining the edge data from the triangular face edge data is described below.

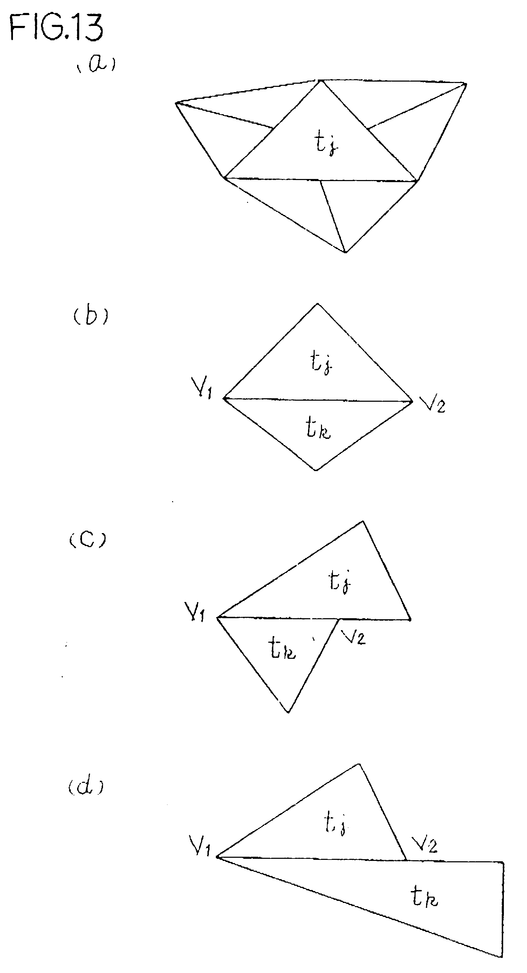

First, when step 120 is entered, the initial condition i = 0 is set. Then, step 121 is entered, in which the triangular face data ti (i = 0, 1, ..., n) is sequentially read from the triangular face data memory 13. Next, when step 123 is entered, the normal vector of the triangular face data ti viewed from eye-line is computed, and then, either the front or the back is identified during the next step 124. If the processor identifies the back surface, the ensuing triangular face data is read. Next, when step 125 is entered, the triangular face data tk adjoining ti is read. As shown in Fig. 13 (a), there are a maximum of six units of the triangular face data tk. Next, the normal vector of the data tk is computed in the following step 126. When the next step 127 is entered, the processor unit identifies whether the edge data can be generated or not by identifying whether the normal vectors of these data ti and tk coincide with each other, or not. If the edge data cannot be generated, then, operation mode is back to step 121, in which the ensuing triangular-face data is read. While step 128 is underway, if the processor unit identifies that the edge data can be generated, the processor unit computes the edge data values V₁ V₂, and then, in which the data of V₁ V₂ is stored in the edge data memory 15. As shown in Fig. 13 (b) through (d), there are three kinds of the edge data patterns. When the next step 129 is entered, the starting point V₁ is stored in memory as data V₀. Next, step 130 is entered, in which the processor unit searches a pair of the triangular face data ti and tk generating the edge having the starting point V₂. Next, step 131 is entered, in which the processor unit computes the values of the edge data V₁ V₂ and stores them in the edge data memory 15.

Those processes including steps 130 and 131 are repeatedly executed until the operation mode returns to the starting point. Those processes including steps 121 through 133 are executed in connection with all the triangular face data ti. As a result, all the edge data are generated before eventually being written into the edge data memory 15.

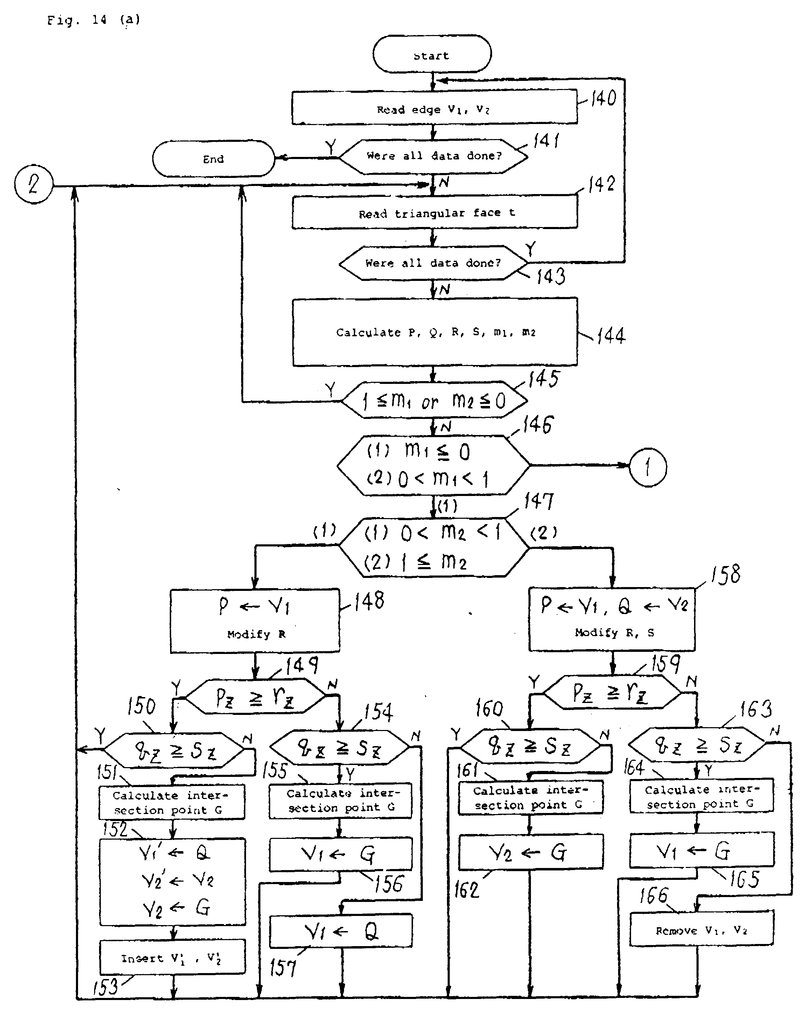

Next, referring now to the flowcharts shown in Fig. 14 (a) and (b), the process for determining the depth between the edge data and the triangular edge data before erasing part of the edge data concealed by the triangular face data is described below.

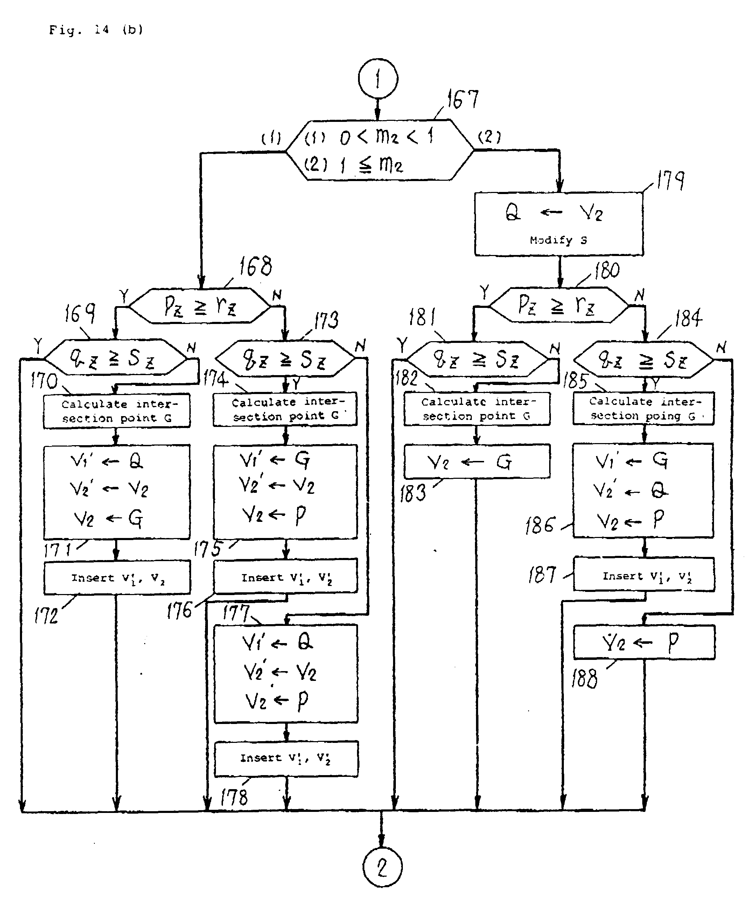

First, step 140 is entered, in which the edge data V₁ V₂ are read from the edge data memory 15. Then, step 142 is entered, in which the triangular face data t is sequentially read from the triangular face data memory 13. Next, step 144 is entered (see Fig. 15), in which the ensuing points are computed, where the edge data V₁ V₂ intersects the triangular face data t as viewed from the eye-line (in the direction of the axis Z).
P (px, py, pz), Q (qx, qy, qz),
R (rx, ry, rz), S (sx, sy, sz),
m₁ and m₂
where P and Q are on the edge data V₁ V₂ and R and S are on the edges of the triangular face. Pand R, Q and S, are respectively isomorphic. m₁ and m₂ are respectively the one-dimensional coordinate values of P and Q on their data V₁ V₂ when V₁ = 0 and V₂ = 1.

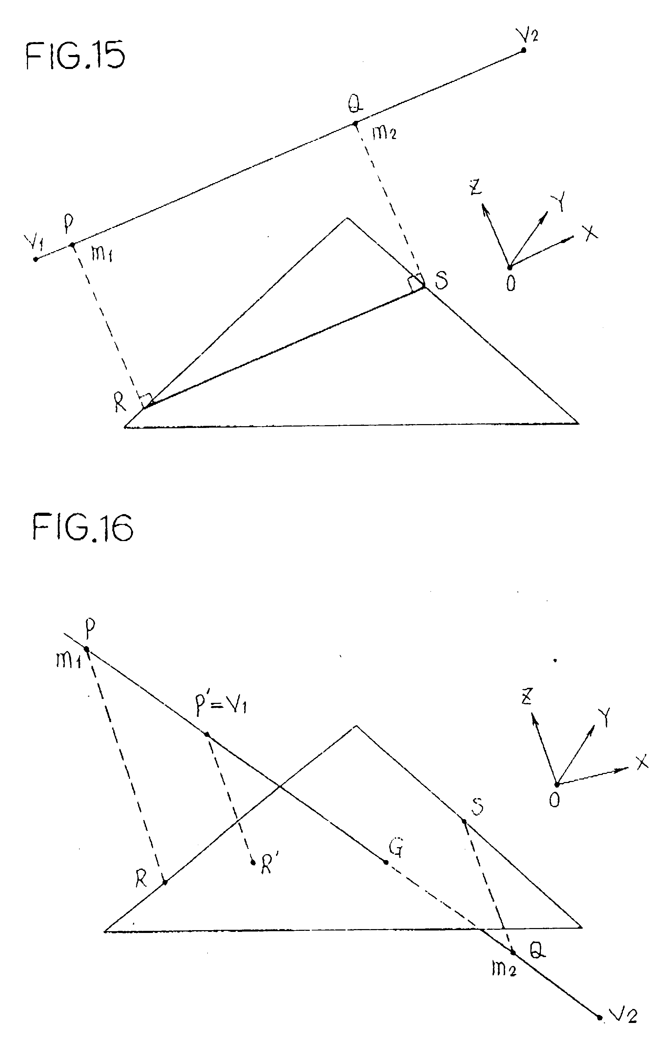

Next, step 145 is entered, the processing unit identifies whether the edge data V₁ V₂ intersects the triangular face data t, or not, as viewed from eye-line direction (in the direction of the axis Z). If the edge data V₁ V₂ does not intersect the triangular face data t (when 1 ≦ m₁ or m₂ ≦ 0), the operation mode is again back to step 142, in which the processor unit reads the next triangular face data. If the edge data V₁ V₂ intersects the triangular face data t, then, step 146 is entered. When the following step 146 is underway, if the condition m₁ ≦ 0 were established, then the operation mode proceeds to step 147. On the other hand, if the condition 0 ≦ m₁ ≦ 0 were established, then, step 167 is entered. If the condition 0 ≦ m₂ ≦ 1 were established while step 147 is underway, then, operation mode proceeds to step 148. If the condition 1 ≦ m₂ were established, then, step 158 is entered. As shown in Fig. 16, while step 148 is underway, since P leaves the position right above the edge data V₁ V₂, the following equation is applied.
P′ (px, py, pz) = V₁ (v₁x, v₁y, v₁z)

Then, depending on the condition of P, the processor unit modifies R into R′.

Next, while 149 is undeway, if the condition pz ≧ rz were not established, step 150 is entered. If the condition pz ≧ rz were not established, then, operation mode proceeds to step 154. While step 154 is underway, if the condition qz ≧ sz were established, since the edge data V₁ V₂ cannot be concealed by the triangular face at all, the operation mode is again back to step 142 to read the next triangular face data. If the condition qz ≧ sz were not established, then, step 151 is entered. While step 151 is underway, the processor unit computes the intersecting point G beween the edge data V₁ V₂ and the triangular-face data t. Next, the processor unit substitutes Q for V₁′ and V₂ for V₂′ and then modifies the edge data V₁ V₂ of the edge data memory 15 into V₂ = G in the following step 152. When the next step 153 is entered, the edge data V₁ V₂ is stored (inserted) in the edge data memory 15, and then, the operation mode is again back to step 142.

While step 154 is underway, if the condition qz ≧ sz were established, then step 155 is entered. If the condition qz ≧ sz were not established, the operation mode proceeds to step 157. Next, when step 155 is entered, the processor unit computes the intersecting point G between the edge V₁ V₂ and the triangular face data t. Next, the processor unit modifies the edge data V₁ V₂ in the edge data memory 15 into V₁ = G while step 156 is underway. Next, when the next step 157 is entered, the processor unit modifies the edge data in the edge data memory 15 into V₁ = Q. Then, the operation mode is again back to step 142 to read the ensuing triangular face data.

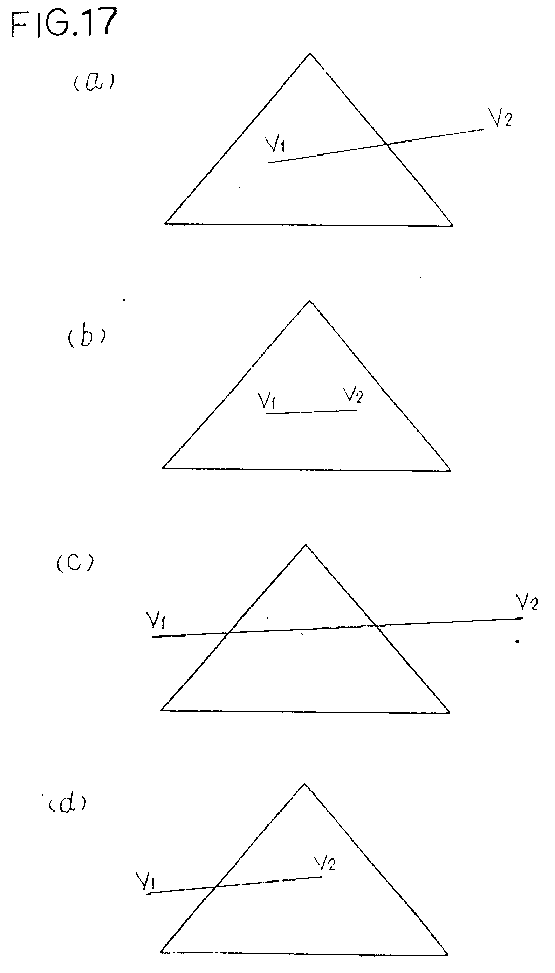

Fig. 17 (a) designates those processes ranging from step 148 to step 157 as viewed from the eye-line direction (in the direction of the axis Z). Likewise, Fig. 17 (b) designates those processes ranging from step 158 to step 166. Fig. 17 (c) designates those processes ranging from step 168 to step 178. Fig. 17 (d) designates those processes ranging from step 179 to step 188.

Like those cases ranging from step 148 to step 157, when dealing with each of those cases shown in Fig. 17 (b) through (d), the processor unit modifies and erases the edge data V₁ V₂ stored in the edge data memory 15 or inserts the edge data V₁ V₂ into the edge memory 15 as required.

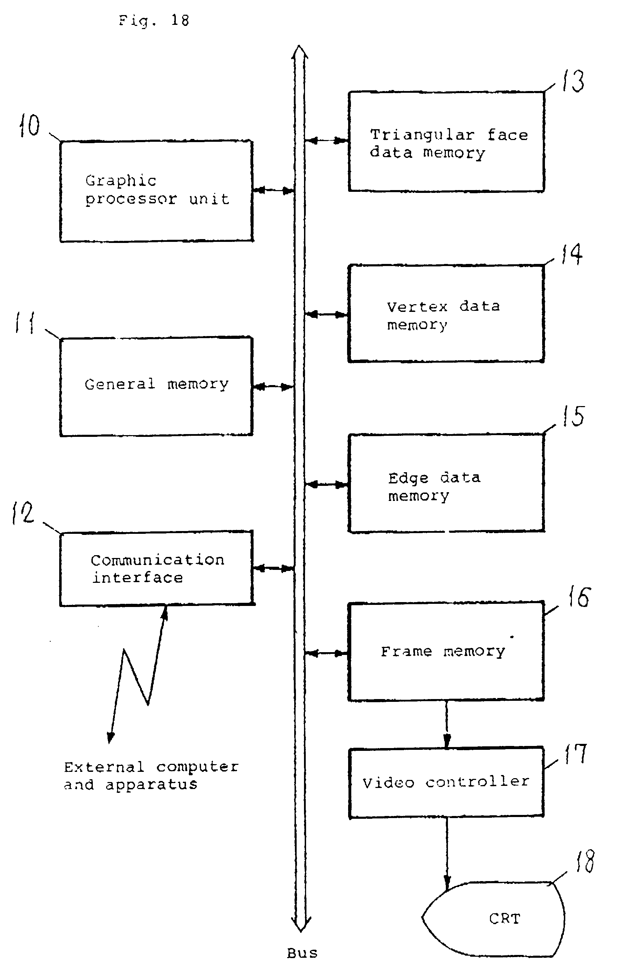

Referring now to Fig. 18, the second embodiment of the invention is described below. The second embodiment additionally provides the graphic-data processing system with a display unit. The first embodiment provides the system with solid functions including generation of the triangular face data, geometrical set operation, computation of the mass property, and the hidden surface and line removal process. The system reflecting the first embodiment is necessarily connected to the graphic display unit via the communication interface 12 for displaying the edge data yielded from the hidden surface and line removal process. To compensate for this, the second embodiment provides the system with display function by additionally providing a display unit. As a result, the second embodiment materializes the three-dimensional geometrical data processing system capable of executing highly functional operations.

As shown in Fig. 18, the system reflecting the second embodiment is additionally provided with frame memory 16 storing the displayable data, CRT 18 composed of display screen, and the video controller 17 which displays data of the frame memory 16 on the CRT 18 in addition to those basic components of the first embodiment.

More particularly, the edge data to be displayed on the CRT 18 yielded from the hidden surface and line removal process is read out of the edge data memory 15 by the graphic-data processing unit 10, and then the edge data is converted into displayable data before being stored in the frame memory 16. Those data stored in the frame memory 16 are eventually displayed on the CRT 18 by the video controller 17.

As is clear from the foregoing description, the graphic data processing apparatus embodied by the invention expresses the three-dimensional solid geometry by effectively applying the "B-Rep expression method by means of triangular face data which do not necessarily and always share their edges". By virtue of the introduction of this method, those data expressing the solid geometry are merely composed of the triangular face data and the vertex data, thus dispensing with the edge data. Furthermore, since the data structure is of the one-dimensional stationary-length list, all the data processed by the invented system offer substantial convenience for the computer-applied data processing operations. The system embodied by the invention provides the possibility for achieving solid computing functions including geometrical set operation, computation of mass property, and hidden-surface-and-line removal process merely by applying simple algorithm and data processing system. As a result, reliability of the data processing function is significantly improved, and yet, the speed of the data processing operation is conspicuously accelerated. Furthermore, compared to the case of using triangular face data sharing edges, the volume of data is conspicuously decreased.

## Claims

1. A method for three-dimensional triangle based geometry processing whereby an arbitrary three-dimensional geometrical object is modelled, as a polyhedron, the surface boundary of which is expressed and processed by using data representing a set of connected triangular faces, the method being characterized in that at least two adjacent triangular faces have partially superposed edges, such that at least one of the vertices of said edges is not common (figure 2(d)).

2. The method for three-dimensional geometry processing as defined in claim 1 wherein the geometrical set operations such as union, subtraction, intersection, are carried out among geometrical objects (figure 8), the intersections of the triangular faces composing each geometrical object are defined and further operations can be performed by subdividing a triangle into smaller ones if it has one or more intersections, obtaining an accurate geometrical shape as the result.

3. The method for three-dimensional geometry processing as defined in claim 1, wherein in calculating mass properties such as volume, the center of gravity, moment of inertia, of a three-dimensional geometrical object, three-dimensional run length data are transduced from the triangular face data expressing the geometrical shape (figures 11(a) and 11(b) and the calculations for the mass properties are performed by using the data.

4. The method of three-dimensional geometry processing as defined in claim 1, wherein in hidden line removal and displaying a three-dimensional geometrical object, edges are found (figure 12) from the triangular faces expressing the three-dimensional geometrical object and by judging the depth (figures 14(a) and 14(b)) between the edges and the triangular faces, the hidden line removal processing can be carried out, displaying the geometrical object.

5. A three-dimensional triangle based geometry processing apparatus (10, 11, 12, 13 ,14, 15) wherein an arbitrary three-dimensional geometrical object is modelled as a polyhedron, the surface boundary of which is expressed and processed by using data representing a set of connected triangular faces, the apparatus comprising a triangular face data storage unit (13) storing the triangular face data , a vertex data storage unit (14) storing the vertex data of said triangular face data, an edge data storage unit (15) storing the edge data of said triangular face data and a graphic processing operation unit (10) performing various operations including geometrical set operation and mass properties calculation, the apparatus being characterised by the fact that, in the operation of the graphic processing operation unit, at least two adjacent triangular faces have partially superposed edges, such that at least one of the vertices of said edges is not common (figure 2(d)).

6. The three-dimensional geometry processing apparatus as defined in claim 5 comprising a graphic processing operation unit (10) having means such that, when geometrical set operations are performed among geometrical shapes (figure 8), the intersections of the triangles expressing the surface of each three-dimensional geometrical shape are judged and further operations can be performed by subdividing a triangle into smaller ones if it has one or more intersections, obtaining an accurate shape as the result.

7. The three-dimensional geometry processing apparatus as defined in claim 5 comprising a graphic processing operation unit (10) which has a function wherein three-dimensional run-length data are transduced from the triangular face data expressing the surface of a three-dimensional geometrical object, figures 11(a) and 11(b) and by using the data, calculation of mass properties can be performed.

8. The three-dimensional geometry processing apparatus as defined in claim 5 comprising a graphic processing operation unit (10) in which in hidden line removal and displaying a three-dimensional geometrical object, means are provided for finding edges (figure 12) from the triangular faces expressing the three-dimensional geometrical object and by the judgement of the depth (figures 14(a) and 14(b)) among those edges and the triangular faces, the hidden line removal is performed, displaying the geometrical object.

9. The three-dimensional geometry processing apparatus as defined in claim 5 further comprising (figure 18) a frame memory unit (16) to store video picture data, a raster-type display unit (17) and a unit (18) which displays pictures on the said display unit in response to said video picture data from said frame memory unit.

## Patentansprüche

1. Verfahren zur Verarbeitung einer dreidimensionalen, auf einem Dreieck basierenden Geometrie, wobei ein wahlweises, dreidimensionales, geometrisches Objekt modellmäßig aufgebaut wird, wie beispielsweise ein Polygon, wobei die Oberflächengrenze davon unter Verwendung von Daten, die einen Satz von verbundenen Dreieckflächen darstellen, dargestellt und verarbeitet wird, wobei das Verfahren dadurch gekennzeichnet ist, daß mindestens zwei benachbarte Dreieckflächen teilweise übereinandergelegte Kanten derart besitzen, daß mindestens einer der Scheitelpunkte der Kanten nicht gemeinsam ist (Fig. 2 (d)).

2. Verfahren zur Verarbeitung einer dreidimensionalen Geometrie nach Anspruch 1, wobei die geometrischen Satz-Operationen, wie beispielsweise Vereinigung, Subtraktion, Schneiden, unter geometrischen Objekten (Fig. 8) ausgeführt werden, wobei die Schnitte der Dreieckflächen, die jedes geometrische Objekt zusammensetzen, definiert werden, und weitere Operationen durch Dividieren eines Dreiecks in kleinere durchgeführt werden können, falls es eine oder mehr Schnittstelle(n) besitzt, um so eine akkurate, geometrische Form als Ergebnis zu erhalten.

3. Verfahren zur Verarbeitung einer dreidimensionalen Geometrie nach Anspruch 1, wobei in der Berechnung von Massen-Eigenschaften, wie beispielsweise ein Volumen, der Schwerpunkt, ein Trägheitsmoment, eines dreidimenionalen, geometrischen Objekts dreidimensionale Lauflängendaten von den Dreieckflächendaten, die die geometrische Form ausdrücken (Fig. 11 (a) und (b)), umgewandelt werden und die Berechnungen der Massen-Eigenschaften unter Verwendung dieser Daten durchgeführt werden.

4. Verfahren zur Verarbeitung einer dreidimensionalen Geometrie nach Anspruch 1, wobei für die Entfernung der verdeckten Linie und die Anzeige eines dreidimensionalen, geometrischen Objekts Kanten (Fig. 12) aus den Dreieckflächen gefunden werden, die das dreidimensionale, geometrische Objekt darstellen, und durch Entscheidung der Tiefe (Fig. 14 (a) und (b)) zwischen den Kanten und den Dreieckflächen das Entferungsverfahren der verdeckten Linie ausgeführt werden kann, wobei das geometrische Objekt angezeigt wird.

5. Gerät zur Verarbeitung einer dreidimensionalen, auf einem Dreieck basierenden Geometrie (10, 11, 12, 13, 14, 15), wobei ein wahlweises, dreidimensionales, geometrisches Objekt modellmäßig als ein Polygon aufgebaut wird, wobei die Oberflächengrenze davon dargestellt und unter Verwendung von Daten verarbeitet wird, die einen Satz verbundener Dreieckflächen darstellen, wobei das Gerät eine Dreieckflächendaten-Speichereinheit (13), die die Dreieckflächendaten speichert, eine Scheitelpunktdaten-Speichereinheit (14), die die Scheitelpunktdaten der Dreieckflächendaten speichert, eine Kantendaten-Speichereinheit (15), die die Kantendaten der Dreieckflächendaten speichert, und eine graphische Verarbeitungs-Betriebseinheit (10), die verschiedene Operationen, einschließlich einer geometrischen Satz-Operation und Massen-Eigenschafts-Berechnungen, durchführt, aufweist, wobei das Gerät dadurch gekennzeichnet ist, daß in dem Betrieb der graphischen Verarbeitungs-Betriebseinheit mindestens zwei benachbarte Dreieckflächen teilweise übereinandergelegte Kanten besitzen derart, daß mindestens einer der Scheitelpunkte der Kante nicht gemeinsam ist (Fig. 2 (d)).

6. Gerät zur Verarbeitung einer dreidimensionalen Geometrie gemäß Anspruch 5, das eine graphische Verarbeitung-Betriebs-Einheit (10) aufweist, die Einrichtungen derart besitzt, daß dann, wenn die geometrischen Satz-Operationen unter geometrischen Formen ausgeführt werden (Fig. 8), die Schnittstellen der Dreiecke, die die Oberfläche jeder dreidimensionalen, geometrischen Form ausdrücken, beurteilt werden, und weitere Operationen durch Unterteilen eines Dreiecks in kleinere Formen durchgeführt werden kann, wenn es eine oder mehrere Schnitte besitzt, um eine akkurate Form zu erhalten.

7. Gerät zur Verarbeitung einer dreidimensionalen Geometrie nach Anspruch 5, das eine graphische Verarbeitungs-Betriebs-Einheit (10) aufweist, die eine Funktion besitzt, bei der dreidimensionale Lauflängendaten aus Dreieckflächendaten, die die Oberfläche eines dreidimensionalen, geometrischen Objekts (Fig. 11 (a) und (b)) darstellen, und unter Verwendung der Daten gewandelt werden, wobei eine Berechnung der Massen-Eigenschaften durchgeführt werden kann.

8. Gerät zur Verarbeitung einer dreidimensionalen Geometrie nach Anspruch 5, das eine graphische Verarbeitungs-Betriebs-Einheit (10) aufweist, in der eine Entfernung einer verdeckten Linie und ein Anzeigen eines dreidimensionalen, geometrischen Objekts vorgenommen werden, wobei Einrichtungen zum Auffinden von Kanten (Fig.12) aus den Dreieckflächen, die das dreidimensionale, geometrische Objekt darstellen, vorgesehen sind, und wobei durch die Entscheidung der Tiefe (Fig. 14 (a) und (b)) unter diesen Kanten und Dreieckflächen, die Entfernung der verdeckten Linie durchgeführt wird, wobei das geometrische Objekt angezeigt wird.

9. Gerät zur Verarbeitung einer dreidimensionalen Geometrie nach Anspruch 5, das weiterhin (Fig.18) eine Rahmenspeichereinheit (16), um Video-Bilddaten zu speichern, eine Anzeigeeinheit (17) vom Rastertyp und eine Einheit (18), die Bilder auf der Anzeigeeinheit in Abhängigkeit der Video-Bilddaten aus der Rahmenspeichereinheit anzeigt, aufweist.

## Revendications

1. Procédé de traitement d'une géométrie à base de triangles tridimensionnelle selon lequel un objet géométrique tridimensionnel arbitraire est modélisé, tel qu'un polyèdre, dont la limite superficielle est exprimée et traitée en utilisant des données représentant un ensemble de faces triangulaires reliées, procédé caractérisé en ce qu'au moins deux faces triangulaires adjacentes possèdent des bords partiellement superposés, de telle sorte qu'au moins l'un des sommets desdits bords n'est pas commun (Figure 2(d)).

2. Procédé de traitement d'une géométrie tridimensionnelle selon la revendication 1, dans lequel les opérations de détermination géométrique telles qu'une opération OU, une soustraction, une intersection, sont effectuées parmi les objets géométriques (Figure 8), les intersections des faces triangulaires constituant chaque objet géométrique sont définies et d'autres opérations peuvent être effectuées en subdivisant un triangle en triangles plus petits s'il possède une ou plusieurs intersections, en obtenant pour résultat une forme géométrique précise.

3. Procédé de traitement d'une géométrie tridimensionnelle selon la revendication 1, dans lequel en calculant des propriétés de masse telles que le volume, le centre de gravité, le moment d'inertie, d'un objet géométrique tridimensionnel, des données de longueur courant tridimensionnelles sont transformées à partir des données de faces triangulaires exprimant la forme géométrique (Figures 11(a) et 11(b)) et les calculs pour les propriétés de masse sont effectués en utilisant les données.

4. Procédé de traitement d'une géométrie tridimensionnelle selon la revendication 1, dans lequel lors de l'élimination des lignes cachées et l'affichage d'un objet géométrique tridimensionnel, les bords sont obtenus (Figure 12) à partir des faces triangulaires exprimant l'objet géométrique tridimensionnel et en évaluant la profondeur (Figures 14(a) et 14(b)) entre les bords et les faces triangulaires, le processus de suppression des lignes cachées peut être effectué, en affichant l'objet géométrique.

5. Dispositif de traitement d'une géométrie à base de triangles tridimensionnelle (10, 11, 12, 13, 14, 15) dans lequel un objet géométrique tridimensionnel arbitraire est modélisé en tant que polyèdre, dont la limite superficielle est exprimée et traitée en utilisant des données représentant un ensemble de faces triangulaires reliées, le dispositif comportant une unité de mémoire de données de faces triangulaires (13) mémorisant les données de faces triangulaires, une unité de mémoire de données de sommets (14) mémorisant les données de sommets desdites données de faces triangulaires, une unité de mémoire de données de bord (15) mémorisant les données de bord desdites données de faces triangulaires et une unité de traitement graphique (10) effectuant différentes opérations comprenant une opération de détermination géométrique et un calcul de propriétés de masse, le dispositif étant caractérisé par le fait qu'au cours du fonctionnement de l'unité de traitement graphique, au moins deux faces triangulaires adjacentes ayant des bords partiellement superposés, de telle sorte qu'au moins l'un des sommets desdits bords n'est pas commun (Figure 2(d)).

6. Dispositif de traitement d'une géométrie tridimensionnelle selon la revendication 5, comprenant une unité de traitement graphique (10) possédant des moyens de telle sorte que lorsque des opérations de détermination géométrique sont effectuées parmi des formes géométriques (Figure 8), les intersections des triangles exprimant la surface de chaque forme géométrique tridimensionnelle sont évaluées et en outre des opérations peuvent être effectuées en subdivisant un triangle en triangles plus petits s'il possède une ou plusieurs intersections, en obtenant en résultat une forme précise.

7. Dispositif de traitement d'une géométrie tridimensionnelle selon la revendication 5, comportant une unité de traitement graphique (10) possédant une fonction selon laquelle des données de longueur courante tridimensionnelles sont transformées à partir des données de faces triangulaires exprimant la surface d'un objet géométrique tridimensionnel (Figures 11(a) et 11(b)) et en utilisant les données, un calcul des propriétés de masse peut être effectué.

8. Dispositif de traitement d'une géométrie tridimensionnelle selon la revendication 5, comportant une unité de traitement graphique (10) dans laquelle pour une suppression des lignes cachées et un affichage d'un objet géométrique tridimensionnel, des moyens sont prévus pour détecter des bords (Figure 12) à partir des faces triangulaires exprimant l'objet géométrique tridimensionnel et grâce à l'estimation de la profondeur (Figures 14(a) et 14(b)), parmi les bords et les faces triangulaires, la suppression des lignes cachées est effectuée en affichant l'objet géométrique.

9. Dispositif de traitement d'une géométrie tridimensionnelle selon la revendication 5, comportant en outre (Figure 18) une unité de mémoire de trame (16) pour mémoriser des données d'image vidéo, une unité d'affichage de type trame (17) et une unité (18) qui affiche des images sur ladite unité d'affichage en réponse auxdites données d'image vidéo provenant de ladite unité de mémoire de trame.
